(19) Europäisches Patentamt
European Patent Office
Office européen des brevets

(11) EP 4 672 464 A1

(12) EUROPEAN PATENT APPLICATION

(43) Date of publication:
31.12.2025 Bulletin 2026/01

(21) Application number: 25174954.5

(22) Date of filing: 08.05.2025

(51) International Patent Classification (IPC):
H01M 50/289 (2021.01)

(52) Cooperative Patent Classification (CPC):
H01M 50/244; H01M 10/0468; H01M 10/0481;
H01M 50/209; H01M 50/211; H01M 50/242;
H01M 50/289; H01M 50/548; H01M 50/557;
Y02E 60/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 09.05.2024 KR 20240061130

(71) Applicant: SK On Co., Ltd.
Seoul 03161 (KR)

(72) Inventors:
• KIM, Dong Jin
34124 Daejeon (KR)
• LEE, Seung Dong
34124 Daejeon (KR)
• RHEE, Seo Roh
34124 Daejeon (KR)
• CHOI, Keun Woo
34124 Daejeon (KR)

(74) Representative: Prüfer & Partner mbB
Patentanwälte · Rechtsanwälte
Sohnckestraße 12
81479 München (DE)

(54) **BATTERY MODULE AND BATTERY PACK INCLUDING THE SAME**

(57) A battery module includes a cell assembly including a plurality of battery cells, each battery cell including a body portion configured to accommodate an electrode assembly and an electrode lead electrically connected to the electrode assembly, the plurality of battery cells being arranged relative to each other in a first direction; a side plate extending to be disposed on at least one side of the cell assembly in the first direction; and a pressurizing member disposed on an inner side of the side plate and configured to apply pressure to a portion of the cell assembly adjacent to the electrode lead.

FIG. 2

EP 4 672 464 A1

# Description

## TECHNICAL FIELD

The disclosed technology generally relates to a battery module including a plurality of secondary battery cells which may be charge and discharged, and a battery pack including the same.

## BACKGROUND

With the increasing demand for and ongoing technological development of mobile devices, electric vehicles, and energy storage devices, the demand for secondary battery cells as energy sources has rapidly increased. In secondary batteries, the conversion between chemical energy and electrical energy is reversible, allowing secondary battery cells to be repeatedly charged and discharged.

A battery cell may include an electrode assembly including a positive plate, a negative plate, and a separator, and an electrolyte. Battery cells are available in various types, such as pouch-type, square, or cylindrical can-type.

A plurality of battery cells may be arranged in a predetermined pattern and incorporated into a battery module or battery pack, which can be used for various applications such as electric vehicles and energy storage systems (ESSs).

## SUMMARY

Swelling in a secondary battery cell, which refers to an expansion in the volume of the battery cell, may occur during charging and discharging. This swelling may result from solid expansion due to electrochemical reactions or from gas generation under high-temperature conditions. When swelling occurs, it can lead to deformation of the battery cell and reduce the lifespan of both the battery cell and the battery module, due to surface pressure imbalance between the battery cells in the battery module.

To address the swelling issue, a compressible member, such as a pad, may be placed around the battery cell to alleviate surface pressure imbalance between the battery cells.

However, if a thickness deviation occurs in the electrode assembly due to the position of an electrode plate included in the electrode assembly, a compressible pad may be limited in its ability to fully resolve the surface pressure imbalance. When such a surface pressure imbalance occurs in the battery cell, a sudden drop in capacity of the battery cell or a rapid increase in resistance may occur in the area in which the surface pressure is low.

In an aspect of the disclosed technology, a battery module that can extend the lifespan by reducing surface pressure imbalance applied to a battery cell is provided, along with a battery pack including the battery module.

In an aspect of the disclosed technology, a battery module that can limit a rapid decrease in the capacity of a battery cell or a rapid increase in resistance due to surface pressure imbalance is provided, along with a battery pack including the battery module.

In an aspect of the disclosed technology, a battery module that employs a structure to limit battery cell capacity deterioration and/or resistance increase, and that may also reduce the impact on energy density, is provided, along with a battery pack including the battery module.

The disclosed technology may be widely applied in green technology fields, such as electric vehicles, battery charging stations, and solar and wind power generation systems that utilize batteries. Also, the disclosed technology may be used in eco-friendly electric vehicles, hybrid vehicles, and similar applications to prevent climate change by suppressing air pollution and greenhouse gas emissions.

In an aspect of the disclosed technology, a battery module includes a cell assembly including a plurality of battery cells, each battery cell including a body portion configured to accommodate an electrode assembly and an electrode lead electrically connected to the electrode assembly, the plurality of battery cells being arranged relative to each other in a first direction; a side plate extending to be disposed on at least one side of the cell assembly in the first direction; and a pressurizing member disposed on an inner side of the side plate and configured to apply pressure to a portion of the cell assembly adjacent to the electrode lead.

The body portion may include a uniform thickness region at or near a center of the body portion, and a reduced thickness region closer to the electrode lead than the uniform thickness region, the side plate may include a first portion opposing the uniform thickness region in the first direction, and a second portion opposing the reduced thickness region in the first direction, and the pressurizing member may be disposed in at least a portion of the second portion, and is not disposed in at least a portion of the first portion.

The pressurizing member may be not disposed in the first portion.

The side plate may include a first side plate and a second side plate disposed on the two opposite sides of the cell assembly, respectively. A distance between the first side plate and the second side plate in a central portion of the side plate is defined as a first distance, and a minimum distance between a pressurizing member disposed on the first side plate and a pressurizing member disposed on the second side plate is defined as a second distance. Here, the first distance is greater than the second distance.

A difference between an average thickness of the electrode assembly in the uniform thickness region and a minimum thickness of the electrode assembly in the reduced thickness region is defined as a maximum thickness deviation. Here, the first distance and the second distance may satisfy the following range:

$$L1 - (dTm \times N) \leq L2 \leq L1 - dTm$$

where L1 is the first distance, L2 is the second distance, dTm is the maximum thickness deviation, and N is the number of battery cells included in the cell assembly.

The pressurizing member may be coupled to the side plate.

The pressurizing member may be integrally formed with the side plate.

The pressurizing member may be formed as a protrusion on an inner side surface of the side plate.

The pressurizing member may be formed as an inclined surface or a curved surface on an inner side surface of the side plate.

The side plate may include a first portion opposing a uniform thickness region of the body portion in the first direction and a second portion opposing a reduced thickness region of the body portion in the first direction, and the pressurizing member may be formed as the second portion of the side plate.

The pressurizing member may have a constant thickness in a second direction in which the electrode lead extends from the electrode assembly.

The pressurizing member may have a shape such that an outer side of the pressurizing member protrudes further toward the cell assembly than an inner side of the pressurizing member in the second direction in which the electrode lead extends from the electrode assembly.

The side plate may include a first side plate and a second side plate disposed on the two opposite sides of the cell assembly, respectively, and the pressurizing member may be disposed on each of the first side plate and the second side plate.

The side plate may constitute a portion of a module housing, the module housing may include a housing body including the first side plate, the second side plate, and a base plate connecting the first side plate to the second side plate, and the housing body may be divided into at least two parts, and the at least two parts of the housing body may be configured to be coupled to each other in the second direction in which the electrode leads extend from the electrode assembly.

The side plate may include a first portion opposing a uniform thickness region of the body portion in the first direction, and a second portion opposing a reduced thickness region of the body portion in the first direction and connected to the first portion, and the at least two parts may be divided at a boundary between the first portion and the second portion.

The electrode lead may extend from each of two opposite sides of the electrode assembly in the second direction. The reduced thickness region is positioned on each of two opposite sides of the body portion in the second direction, and the pressurizing member may be disposed in the side plate to oppose each reduced thickness region.

The electrode lead may extend from one side of the electrode assembly in the second direction. The reduced thickness region may be positioned on one side of the body portion in the second direction. The pressurizing member may be disposed on one side of the side plate in the second direction to oppose the reduced thickness region positioned on the one side of the body portion in the second direction.

In an aspect of the disclosed technology, a battery pack includes a plurality of battery modules; and a pack housing configured to accommodate the plurality of battery modules, wherein at least one of the plurality of battery modules includes: a cell assembly including a plurality of battery cells, each battery cell including a body portion configured to accommodate an electrode assembly and an electrode lead electrically connected to the electrode assembly, the plurality of battery cells being arranged in a first direction; a side plate extending to be disposed on at least one side of the cell assembly in the first direction; and a pressurizing member disposed on an inner side of the side plate and configured to apply pressure a portion of the cell assembly adjacent to the electrode lead.

## BRIEF DESCRIPTION OF DRAWINGS

....................................................... Certain aspects, features, and advantages of the disclosed technology are illustrated by the following detailed description with reference to the accompanying drawings.

FIG. 1 is a perspective view illustrating a battery module based on an embodiment of the disclosed technology.
FIG. 2 is an exploded perspective view illustrating the battery module illustrated in FIG. 1.
FIG. 3 is a perspective view illustrating a battery cell based on an embodiment of the disclosed technology.
FIG. 4 is a cross-sectional view illustrating a battery cell taken along line I-I' in FIG. 3.
FIGS. 5A is a perspective view illustrating a state in which a cell assembly and a housing body are coupled to each other based on an embodiment of the disclosed technology.
FIG. 5B is a cross-sectional view illustrating a state before a cell assembly is pressurized by a pressurizing member, taken along line II-II' in FIG. 5A.
FIG. 5C is a cross-sectional view illustrating a state in which a cell assembly is pressurized by the pressurizing member in FIG. 5B.
FIG. 6 is a graph illustrating a thickness deviation ($\Delta$T) of an electrode assembly in a battery cell based on an embodiment of the disclosed technology.
FIG. 7 is a view illustrating a thickness change of an electrode assembly in a portion adjacent to an electrode lead based on an embodiment of the disclosed technology.

FIGS. 8A and 8B illustrate an electrode plate; FIG. 8A is a plan view and FIG. 8B is a cross-sectional view illustrating the electrode plate based on an embodiment of the disclosed technology.

FIG. 9A is a perspective view illustrating a modified example of a housing body and a pressurizing member illustrated in FIGS. 5A to 5C.

FIG. 9B is a perspective view illustrating a state in which a housing body illustrated in FIG. 9A is separated.

FIG. 9C is a cross-sectional view taken along line III-III' in FIG. 9A.

FIGS. 10A and 10B are cross-sectional views illustrating a modified example illustrated in FIG. 9C.

FIG. 11 is an exploded perspective view illustrating a battery module based on another embodiment of the disclosed technology.

FIG. 12 is a cross-sectional view taken along line IV-IV' in FIG. 11.

FIGS. 13 and 14 are cross-sectional views illustrating a modified example in FIG. 12.

FIGS. 15A and 15B are views illustrating a battery cell based on another embodiment of the disclosed technology.

FIG. 16 is a perspective view illustrating a battery pack based on an embodiment of the disclosed technology.

## DETAILED DESCRIPTION

Embodiments of the disclosed technology will be described with reference to the accompanying drawings.

In the drawings, like reference numerals denote like elements. Redundant or well-known descriptions that may obscure the understanding of the disclosed technology will be omitted for clarify. It should be noted that even when the same reference numerals are used in different drawings, the components illustrated do not necessarily represent the same embodiment.

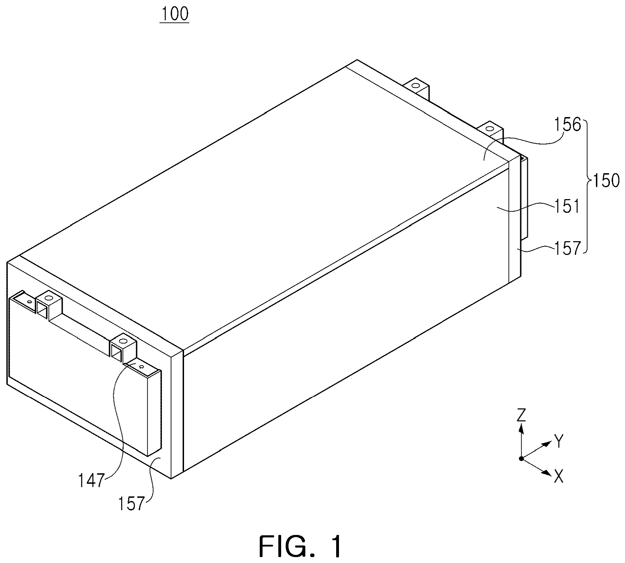

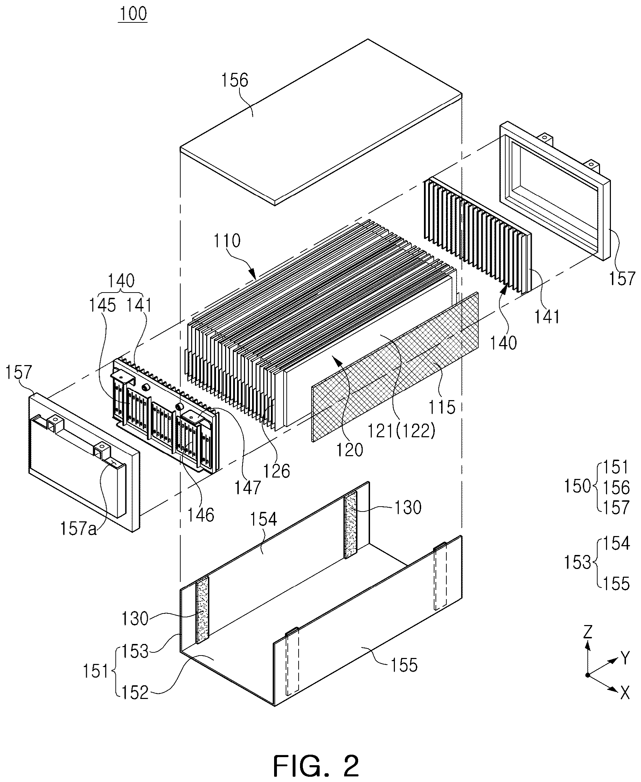

FIG. 1 is a perspective view illustrating a battery module based on an embodiment. FIG. 2 is an exploded perspective view illustrating the battery module illustrated in FIG. 1.

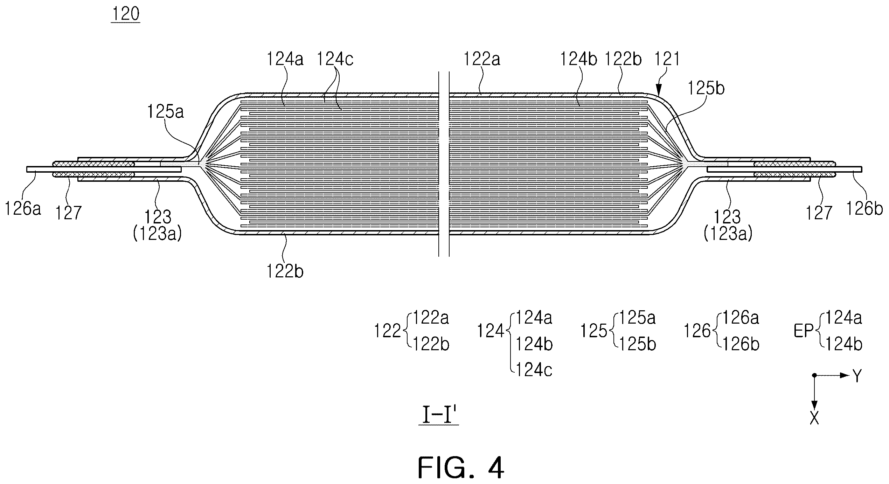

Referring to FIGS. 1 and 2, a battery module 100 based on an embodiment may include a cell assembly 110 in which a plurality of battery cells 120 each including a body portion 122 accommodating an electrode assembly (124 in FIG. 4) and an electrode lead 126 electrically connected to the electrode assembly are arranged in the first direction X, a side plate 153 respectively covering both sides (e.g., two opposite sides) of the cell assembly 110 in the first direction X, and a pressurizing member 130 provided on an inner side of the side plate 153 and configured to apply pressure to a portion of the cell assembly 110 adjacent to the electrode lead 126.

The battery module 100 based on an embodiment may include a busbar assembly 140 having a busbar 145 connected to the electrode lead 126 of the battery cell 120 and a support plate 141 supporting the busbar 145. The battery module 100 based on an embodiment may further include a module housing 150 covering at least a portion of the cell assembly 110.

The cell assembly 110 may include the plurality of battery cells 120 arranged in the first direction X. In an embodiment, the plurality of battery cells 120 may be stacked in a state in which wide surfaces thereof face each other. For example, the plurality of battery cells 120 may be stacked in the first direction X. However, in some implementations, the plurality of battery cells 120 may have a shape of being stacked in a gravity direction (e.g., a third direction) Z.

Each battery cell 120 may be configured as a pouch type battery cell in which an electrode assembly (124 in FIG. 4) is accommodated in a pouch (outer material) 121. The pouch 121 may include a body portion 122 accommodating the electrode assembly 124. Each battery cell 120 may include an electrode lead 126 exposed externally of the pouch 121. The electrode lead 126 may be electrically connected to the electrode assembly 124.

In the battery cell 120 of an embodiment, the width direction (length direction) may indicate the second direction Y in which the electrode lead 126 extends from the electrode assembly (124 in FIG. 4), the thickness direction may indicate the first direction X perpendicular to the wide surface of the pouch 121, and the height direction (vertical direction or gravity direction) may indicate the third direction Z perpendicular to the width direction and the thickness direction.

The cell assembly 110 may include a compression pad 115 to absorb expansion due to swelling of the battery cell 120. The compression pad 115 may be disposed between at least a portion of the battery cells 120 or between the battery cell 120 and the side plate 153. When the battery cell 120 expands, the compression pad 115 may be compressed and may absorb expansion of the battery cell 120. The compression pad 115 may also be elastically deformed. The compression pad 115 may suppress the expansion of the entire volume of the cell assembly 110 when swelling occurs. The compression pad 115 may be formed of a foam of a polyurethane material, but the material or structure is not limited thereto. The compression pad 115 may have a size corresponding to the body portion 122, but the size may be varied.

The busbar assembly 140 may include a busbar 145 which is electrically conductive and electrically connected to the electrode lead 126 of the battery cell 120 and a support plate 141 which is electrically insulating. The support plate 141 may be disposed between the plurality of battery cells 120 and the electrically conductive busbar 145 and may support the busbar 145. The support plate 141 may electrically insulate between the busbar 145 and the pouch 121 of the battery cell 120. For example, the busbar 145 may be hook-coupled or may be fused and fixed to the support plate 141. However, the method of coupling the busbar 145 to the support plate 141 may be varied.

The busbar assembly 140 may be disposed in a position opposing the electrode lead 126 of the battery cell 120 and may be electrically connected to a plurality of electrode leads 126. For example, when the electrode lead 126 is disposed on both ends in the second direction Y of the battery cell 120, the busbar assembly 140 may be disposed on both ends in the second direction Y of the battery cell 120 and may be coupled to the electrode lead 126.

The electrode lead 126 may penetrate the support plate 141 of the busbar assembly 140 and may be coupled to the busbar 145 on the outer side of the busbar assembly 140. The busbar 145 may include a coupling hole 146 through which the electrode lead 126 penetrates and is coupled. The electrode lead 126 may be welded and coupled to the busbar 145 while penetrating the coupling hole 146. The plurality of battery cells 120 may be electrically connected to each other in series and/or in parallel by the plurality of busbars 145.

The busbar assembly 140 may include a connection terminal 147 for electrical connection with the busbar 145 and an external component. The battery cell 120 may be electrically connected to an external component through the connection terminal 147. The connection terminal 147 may be exposed to an external component through a through hole 157a formed in the end plate 157.

The module housing 150 may have a structure covering at least a portion of the cell assembly 110. The module housing 150 may form at least a portion of the exterior of the battery module 100.

The module housing 150 may have various shapes or divided structures. As an example, the module housing 150 may be configured to include a housing body 151 having a cross-sectional shape of one side is open, and a housing cover 156 combined with the housing body 151 and forming an internal space. The housing cover 156 may cover a top surface of the cell assembly 110. The housing body 151 may include a base plate 152 supporting a lower portion of the cell assembly 110, and a side plate 153 extending from both ends of the base plate 152 in the third direction Z and supporting a side surface of the cell assembly 110. The module housing 150 may have a structure in which the end plate 157 is coupled to a front surface and a back surface of the length direction of the module housing 150. The end plate 157 may be coupled to each of both side surfaces on which the electrode lead 126 of the battery cell 120 is disposed, e.g., both sides in the second direction Y of the module housing 150.

The cell assembly 110 may be disposed on an inner side of the module housing 150. At least one surface of the module housing 150 may function as a heat dissipation plate releasing heat generated from the battery cell 120 externally. At least a portion of the module housing 150 may be formed of a material having high thermal conductivity, such as metal. For example, the module housing 150 may include an aluminum material. However, the material of the housing body 151 is not limited thereto, and various materials other than metal may be used as long as the materials have strength and thermal conductivity, similarly to metal.

The module housing 150 in FIG. 1 and FIG. 2 may be configured to completely surround the external surface of the cell assembly 110, or the module housing 150 may be configured such that at least one surface of the cell assembly 110 is exposed externally. For example, the module housing 150 may not cover a lower surface of the cell assembly 110.

The pressurizing member 130 may be provided on the inner side of the side plate 153 and may pressurize the cell assembly 110 in a portion adjacent to the electrode lead 126. The pressurizing member 130 may have a shape protruding toward the cell assembly 110 from the inner side of the side plate 153. The pressurizing member 130 may be configured to pressurize a low-thickness region of the electrode assembly 124 in the battery cell 120. The pressurizing member 130 may pressurize the low-thickness region of the electrode assembly 124 and may compensate for the thickness of the thin portion of the electrode assembly 124, and may also increase the pressure in the low-thickness region of the electrode assembly 124. Accordingly, the pressurizing member 130 may limit a rapid decrease in capacity or a rapid increase in resistance of the battery cell 120 due to surface pressure imbalance.

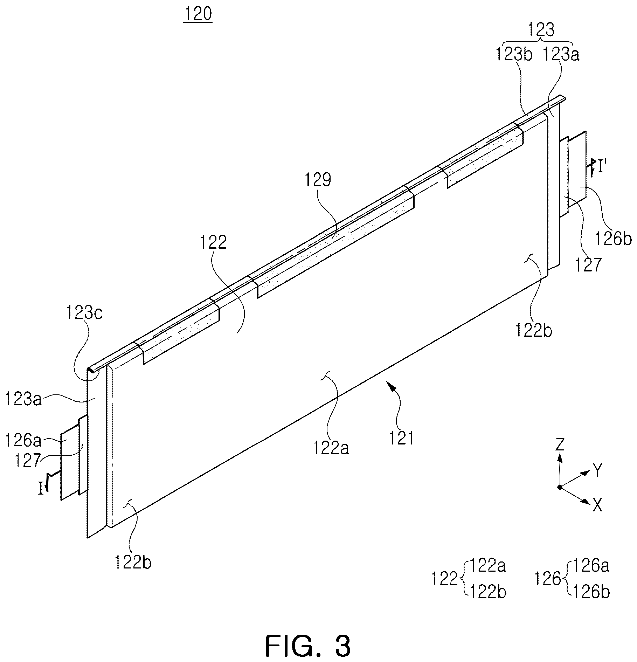

FIG. 3 is a perspective view illustrating a battery cell based on an embodiment. FIG. 4 is a cross-sectional view illustrating a battery cell taken along line I-I' in FIG. 3.

Referring to FIGS. 3 and 4, the battery cell 120 may include a pouch type battery cell in which an electrode assembly 124 is accommodated in a pouch 121 formed of a flexible material.

The battery cell 120 may include a body portion 122 accommodating the electrode assembly 124 therein, a sealing portion 123 extending from at least a portion of the outer surface of the body portion 122 and sealing the body portion 122, and an electrode lead 126 electrically connected to the electrode assembly 124.

The pouch 121 may be formed in a container shape and may provide an internal space in which the electrode assembly 124 and an electrolyte are accommodated. For example, the pouch 121 may include an outer sheet laminated with a resin such as polypropylene and aluminum. However, the material forming the pouch 121 may be varied.

The pouch 121 may include a body portion 122 and a sealing portion 123. The body portion 122 may be formed in a container shape and may provide an internal space having a predetermined shape (e.g., a hexahedron) in which an electrode assembly 124 and an electrolyte are accommodated. The body portion 122 may include a uniform thickness region 122a including a center of the body portion 122 and a reduced thickness region 122b disposed more adjacent to the electrode lead 126 than the uniform thickness region 122a.

The sealing portion 123 may extend from at least a portion of an outer surface of the body portion 122. The sealing portion 123 may be formed in a flange shape extending in an outward direction from at least a portion of the outer surface of the body portion 122. For example, when the pouch 121 is formed by folding one outer sheet, the sealing portion 123 may have a shape extending from three of the four sides of the body portion 122. Alternatively, when the pouch 121 is formed by piling up two outer sheets, the sealing portion 123 may have a shape extending from the four sides of the body portion 122. In the sealing portion 123, the outer sheets forming the pouch 121 may be piled up or overlap each other. The sealing portion 123 may include a portion in which the piled up outer sheets are bonded to each other to seal the body portion 122. A heat-melting method may be used for bonding the sealing portion 123, but an embodiment thereof is not limited thereto.

The electrode assembly 124 may include a plurality of electrode plates EP and a plurality of separators 124c and may be accommodated in the internal space of the body portion 122. The electrode plate EP may include a positive electrode plate 124a and a negative electrode plate 124b. The electrode assembly 124 may be configured such that the positive electrode plate 124a and the negative electrode plate 124b are stacked with a separator 124c interposed therebetween while the wide surfaces of the positive electrode plate 124a and the negative electrode plate 124b face each other. Each of the plurality of positive electrode plates and the plurality of negative electrode plates may include an electrode tab 125. The electrode tab 125 may include a positive electrode tab 125a disposed in the positive electrode plate 124a and a negative electrode tab 125b disposed in the negative electrode plate 124b. The electrode tab 125 may be connected to the electrode lead 126 such that the same polarities are in contact with each other.

The electrode lead 126 may be exposed to an external component through a portion of the sealing portion 123. For example, the electrode lead 126 may have a shape extending from the electrode assembly 124 in the second direction Y and may be exposed externally of the sealing portion 123. The electrode lead 126 may include a positive electrode lead 126a connected to the positive electrode tab 125a of the positive electrode plate 124a, and a negative electrode lead 126b connected to the negative electrode tab 125b of the negative electrode plate 124b.

In an embodiment, the sealing portion 123 may be divided into a first sealing portion 123a positioned on a flange in which the electrode lead 126 is disposed, and a second sealing portion 123b positioned on a flange in which the electrode lead 126 is not disposed. In the first sealing portion 123a, the electrode lead 126 may be covered by the insulating portion 127. The insulating portion 127 may increase electrical insulation performance between the electrode lead 126 and the pouch 121 and may increase the sealing performance of the sealing region. The insulating portion 127 may include an insulating film.

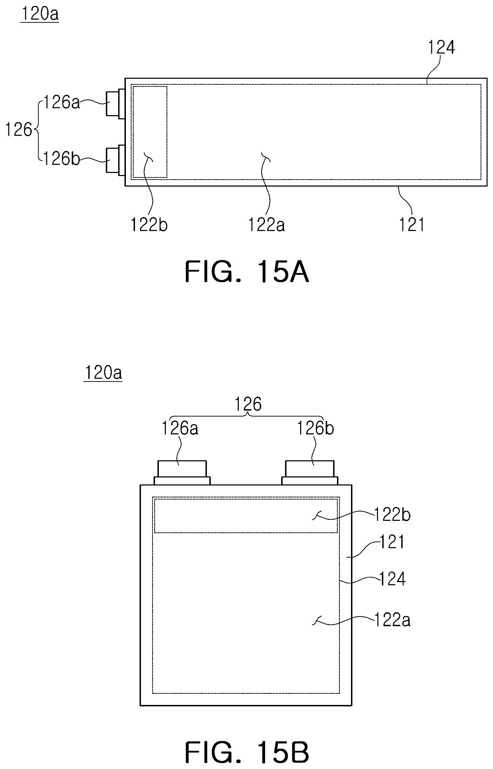

As for the battery cell 120 illustrated in FIG. 3, the electrode leads 126 may be disposed on both sides of the body portion 122 with respect to the second direction Y of the battery cell 120. Specifically, FIG. 3 illustrates a configuration in which the positive electrode lead 126a and the negative electrode lead 126b are disposed in opposite directions. However, the positive electrode lead 126a and the negative electrode lead 126b may be spaced apart from each other while being oriented in the same direction on one side of the body portion 122 (see FIGS. 15A and 15B).

In an embodiment, the battery cell 120 may be formed such that a portion of the sealing portion 123 is folded at least once in order to increase bonding reliability of the sealing portion 123 and to reduce the region occupied by the sealing portion 123. For example, the second sealing portion 123b in which the electrode lead 126 is not disposed may include a folded portion 123c folded in the length direction (e.g., second direction Y) of the battery cell 120. The folded portion 123c may have a folded shape by at least one folding process. In an embodiment, the battery cell 120 may include at least one tape 129 covering the folded portion 123c to prevent the folded portion 123c from unfolding due to increased internal pressure of the battery cell 120. The tape 129 may have a shape enclosing the folded portion 123c.

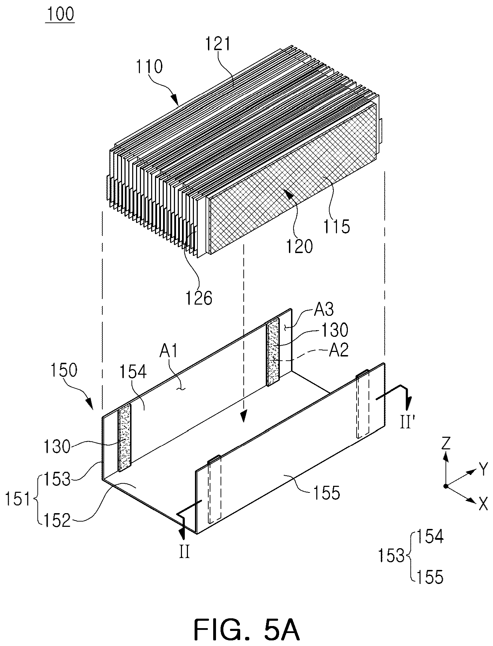

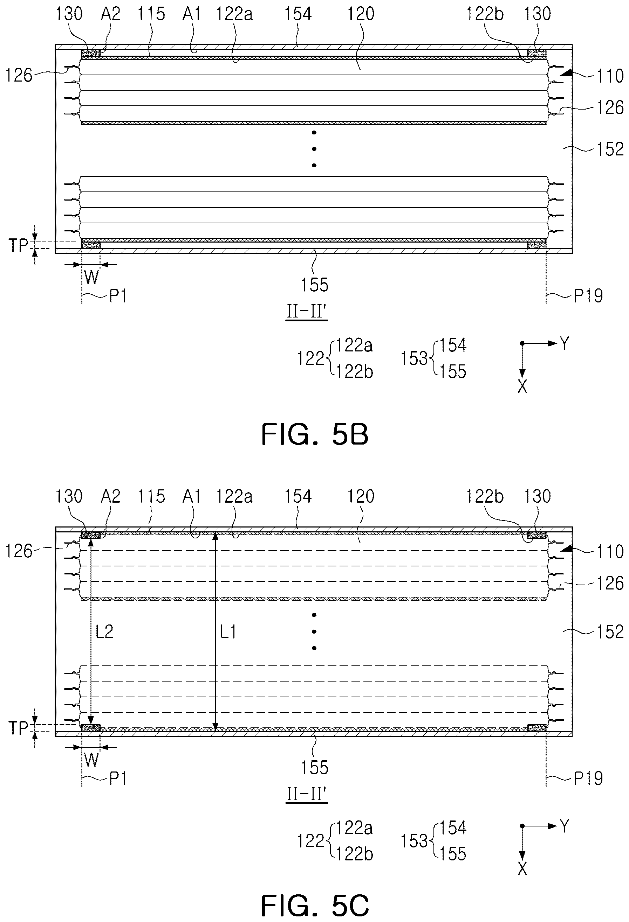

FIGS. 5A is a perspective view illustrating a state in which a cell assembly and a housing body are coupled to each other based on an embodiment, FIG. 5B is a cross-sectional view illustrating a state before a cell assembly is pressurized by a pressurizing member taken along line II-II' in FIG. 5A, illustrating a state before the cell assembly 110 is pressurized by the pressurizing member 130, and FIG. 5C is a cross-sectional view illustrating a state in which a cell assembly is pressurized by the pressurizing member in FIG. 5B. FIG. 5B illustrates a state before the cell assembly 110 is pressurized in order to clearly represent a portion in which the pressurizing member 130 presses the cell assembly 110. FIG. 5C only illustrates the position relationship between the cell assembly 110 and the pressurizing member 130 in a state in which the cell assembly 110 is pressurized by the pressurizing member 130, and does not specifically illustrate a state in which the cell assembly 110 is deformed. In the pressurized state in FIG. 5C, the cell assembly 110 may have a compressed state corresponding to the thickness of the pressurizing member 130 in a position opposing the pressurizing member 130.

The cell assembly 110 may include a plurality of battery cells 120. As described with reference to FIGS. 3 and 4 , the body portion 122 of the battery cell 120 may include a uniform thickness region 122a including a center of the body portion 122, and a reduced thickness region 122b disposed more adjacent to the electrode lead 126 than the uniform thickness region 122a.

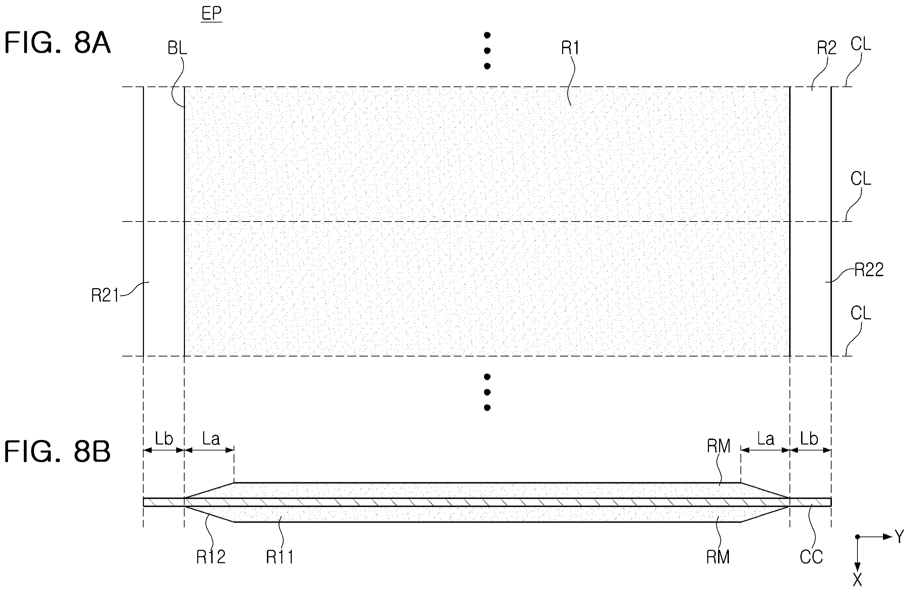

Referring to FIGS. 3 to 5C together, in a region in which slurry (including an active material, a conductive material, and a binder) (RM in FIG. 8B) is applied, the electrode assembly 124 may include a region having a uniform thickness and a region having a relatively smaller thickness than the region having the uniform thickness. The uniform thickness region 122a and the reduced thickness region 122b of the body portion 122 may be determined depending on the thickness of the electrode assembly 124 positioned on an inner side of the body portion 122. The uniform thickness region 122a and the reduced thickness region 122b may be determined based on the region in which slurry (including an active material) (RM in FIG. 8B) is applied or the region in which electrode plates EP are stacked, and the electrode tab 125 may not be included in the reduced thickness region 122b. The uniform thickness region 122a and the reduced thickness region 122b may have a quadrangular shape.

The uniform thickness region 122a may be defined as a portion of the body portion 122 facing a region of the electrode assembly 124 having a uniform thickness. Here, the term "uniform thickness" is not limited to the example that the thickness may be completely the same, and may indicate that the thickness of the electrode assembly 124 may be included in a predetermined range (e.g., in 3%).

The reduced thickness region 122b may indicate a portion of the body portion 122 facing a region in which the thickness of the electrode assembly 124 disposed on the inner side of the body portion 122 is entirely smaller than the uniform thickness region 122a. For example, the reduced thickness region 122b may include a region in which the thickness of the electrode assembly 124 is beyond a predetermined range (e.g., in 3%) and has a thickness smaller than that of the uniform thickness region 122a. Here, the range is not fixed to a specific numerical value, and may change depending on the thickness deviation of a current collector (metal foil) included in the electrode plate EP, the thickness deviation of the slurry including the active material, or others. The reduced thickness region 122b may be a portion of the body portion 122 facing the region having a small thickness of the electrode assembly 124 when pressure is applied to the electrode assembly 124.

The reduced thickness region 122b may be defined as a portion of the body portion 122 opposing a region in which slurry (RM in FIG. 8B) is applied to the electrode plate EP. The reduced thickness region 122b may extend from an end of the electrode plate EP in an inward direction of the electrode plate EP. The reduced thickness region 122b may extend from a position opposing an end position P1 of the first electrode plate (e.g., positive electrode plate) on one side of the body portion 122 in the inward direction of the first electrode plate, and may extend from a position opposing an end position P19 of the second electrode plate (e.g., negative electrode plate) on the other side of the body portion 122 in the inward direction of the second electrode plate.

Referring to FIGS. 5A to 5C, the side plate 153 may be provided as a portion of the module housing 150, and the module housing 150 may include a housing body 151 including a first side plate 154, a second side plate 155, and a base plate 152 connecting the first side plate 154 to the second side plate 155.

The housing body 151 may include a base plate 152 supporting a lower portion of the cell assembly 110, and a side plate 153 extending from both ends of the base plate 152 in the third direction Z and supporting a side surface of the cell assembly 110.

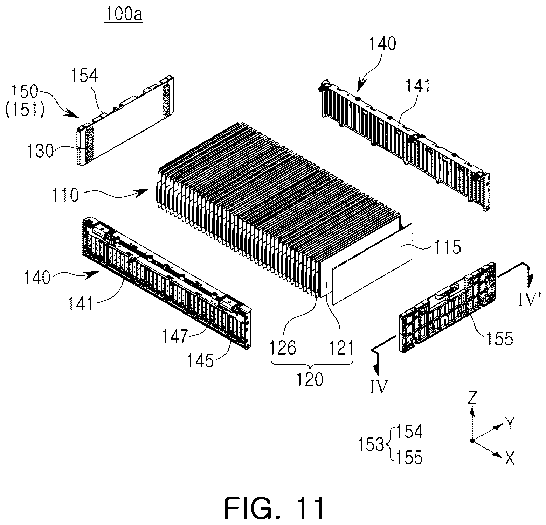

The side plate 153 may include a first side plate 154 and a second side plate 155 disposed on both sides of the cell assembly 110, respectively. The first side plate 154 may cover one side of the cell assembly 110 in the first direction X, and the second side plate 155 may cover the other side of the cell assembly 110 in the first direction X. As an example, the first side plate 154 may extend upwardly from one end (first end) of the base plate 152, and the second side plate 155 may extend upwardly from the other end (second end) of the base plate 152. However, the first side plate 154 and the second side plate 155 are not limited to being connected to the base plate 152. For example, the module housing 150 or the housing body 151 may not include the base plate 152 (see FIG. 11).

The side plate 153 may include a first portion A1 opposing the uniform thickness region 122a of the body portion 122 in the first direction X, and a second portion A2 opposing the reduced thickness region 122b of the body portion 122 in the first direction X. The side plate 153 may further include a third portion A3 disposed on the outer side of the second portion A2 in the second direction Y.

A pressurizing member 130 may be provided on the inner side of the side plate 153 and may pressurize the cell assembly 110 in a portion adjacent to the electrode lead 126. The pressurizing member 130 may have a shape protruding toward the cell assembly 110 from the inner side of the side plate 153.

The side plate 153 may include a first side plate 154 and a second side plate 155 disposed on both sides of the cell assembly 110, respectively, and the pressurizing member 130 may be disposed on each of the first side plate 154 and the second side plate 155.

The pressurizing member 130 may be disposed on at least a portion of the second portion A2 of the side plate 153 and may not be disposed on at least a portion of the first portion A1 of the side plate 153. In some implementations, the pressurizing member 130 may have a shape not covering the entire uniform thickness region 122a in the second direction Y in which the electrode lead 126 extends. For example, the pressurizing member 130 may be disposed in a position out of the uniform thickness region 122a and configured to cover the reduced thickness region 122b. The width W of the pressurizing member 130 in the second direction Y may have a value corresponding to a value of the width of the reduced thickness region 122b (La in FIG. 8B) in the second direction Y.

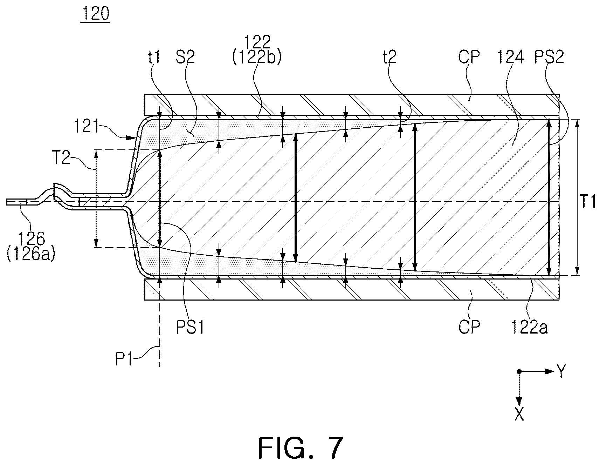

The thickness of the electrode assembly 124 opposing the reduced thickness region 122b (T2 in FIG. 7) may have a value smaller than the thickness of the electrode assembly 124 opposing the uniform thickness region 122a (TI in FIG. 7). Since the pressurizing member 130 has a predetermined thickness TP, at least a portion of the thickness of the electrode assembly 124 opposing the reduced thickness region 122b may be compensated for. In some implementations, the thickness TP of the pressurizing member 130 may compensate for at least a portion of the difference between the thickness of the electrode assembly 124 opposing the uniform thickness region 122a (T1 in FIG. 7) and the thickness of the electrode assembly 124 opposing the reduced thickness region 122b (T2 in FIG. 7).

Also, the pressurizing member 130 may compensate for at least a portion of pressure of the reduced thickness region 122b by increasing pressure of the electrode assembly 124 opposing the reduced thickness region 122b. The thickness T2 of the electrode assembly 124 opposing the reduced thickness region 122b may have a value smaller than the thickness T1 of the electrode assembly 124 opposing the uniform thickness region 122a. Therefore, when swelling occurs in the battery cell 120, the size of the space in which the electrode assembly 124 opposing the reduced thickness region 122b may swell may be larger than that of the size of the space in which the electrode assembly 124 opposing the uniform thickness region 122a may swell.

Accordingly, the surface pressure or pressurizing force applied to the electrode assembly 124 opposing the reduced thickness region 122b by the adjacent battery cell 120 may have a value smaller than that of the surface pressure or pressurizing force applied to the electrode assembly 124 opposing the uniform thickness region 122a. The pressurizing member 130 may compensate for the reduced thickness of the electrode assembly 124 opposing the reduced thickness region 122b such that the surface pressure or pressurizing force applied to the electrode assembly 124 opposing the uniform thickness region 122a and the reduced thickness region 122b may have similar or uniform values. Accordingly, the pressurizing member 130 may maintain pressure applied to the electrode assembly 124 opposing the reduced thickness region 122b at a level similar to the pressure of the electrode assembly 124 opposing the uniform thickness region 122a.

The pressurizing member 130 may compensate for at least a portion of the thickness and/or pressure of the reduced thickness region 122b as described above.

Based on an embodiment, the pressurizing member 130 may not be disposed in the first portion A1 opposing the uniform thickness region 122a. When the pressurizing member 130 is entirely installed in the second direction Y in which the electrode lead 126 extends from the body portion 122, the pressurizing member 130 may also be installed in the first portion A1. In this case, since the pressurizing member 130 pressurizes the uniform thickness region 122a of the body portion 122 which does not need thickness compensation and/or pressure compensation, the thickness in the first direction X of the battery module may increase, such that space efficiency of the battery module may decrease. Also, when the pressurizing member 130 pressurizes the reduced thickness region 122b and also the uniform thickness region 122a, the thickness compensation effect and/or the pressure compensation effect of the pressurizing member 130 in the reduced thickness region 122b may decrease. On the other hand, in an embodiment, since the pressurizing member 130 is mainly installed in the reduced thickness region 122b in which thickness compensation and/or pressure compensation is necessary, the effects of thickness compensation and/or pressure compensation of the pressurizing member 130 in the reduced thickness region 122b may be sufficiently obtained, and also the issue of reduced space efficiency in the battery module due to the installation of the pressurizing member 130 may be addressed.

The side plate 153 may include a first side plate 154 and a second side plate 155 disposed on both sides of the cell assembly 110, respectively. When a distance between the first side plate 154 and the second side plate 155 in the central portion of the side plate 153 is defined as a first distance L1, and a minimum distance between the pressurizing member 130 provided on the first side plate 154 and the pressurizing member 130 provided on the second side plate 155 is defined as a second distance L2, the first distance L1 may have a value greater than that of the second distance L2. Since the pressurizing member 130 has a predetermined thickness TP, at least a portion of the thickness of the cell assembly 110 may be compensated for in the second portion A2 of the side plate 153 opposing the reduced thickness region 122b of the body portion 122. The thickness of the cell assembly 110 opposing the second portion A2 of the side plate 153 may correspond to the second distance L2, and the thickness of the cell assembly 110 opposing the first portion A1 of the side plate 153 may correspond to the first distance L1.

When the difference between the average thickness T1 of the electrode assembly 124 in the uniform thickness region 122a and the minimum thickness T2 of the electrode assembly 124 in the reduced thickness region 122b is defined as a maximum thickness deviation 'dTm' for one battery cell 120, the first distance L1 and the second distance L2 may satisfy the following range-defining formula (Formula 1). The first distance L1 and the second distance L2 may be values measured when the cell assembly 110 is pressurized by the pressurizing member 130 as illustrated in FIG. 5C. The first distance L1 and the second distance L2 may be values measured when the cell assembly 110 is assembled to the module housing 150.

$$[Formula\ 1]\ L1 - (dTm \times N) \leq L2 \leq L1 - dTm$$

Where, L1: first distance, L2: second distance, dTm: maximum thickness deviation, N: number of battery cells 120 included in cell assembly 110

In some implementations, the second distance L2 may be equal to or greater than the value obtained by subtracting the total maximum thickness deviation dTm of all battery cells 120 in the cell assembly 110 from the first distance L1. The second distance L2 may be equal to or less than the value obtained by subtracting the maximum thickness deviation dTm of one battery cell 120 from the first distance L1.

first distance L1 may be equal to the sum of second distance L2 and thickness TP of two pressurizing members 130. Accordingly, when the pressurizing members 130 disposed in the first side plate 154 and the second side plate 155 have the same thicknesses, the thickness TP of each pressurizing member 130 may be calculated as L1-L2/2. However, the pressurizing member 130 may be disposed in only one of the first side plate 154 and the second side plate 155, and the thickness of the pressurizing member 130 disposed in the first side plate 154 and the thickness of the pressurizing member 130 disposed in the second side plate 155 may have different values.

The thickness T2 of the electrode assembly 124 in the reduced thickness region 122b may have a minimum value in an end position P1 of the electrode plate EP. However, the point at which the thickness T2 of the electrode assembly 124 has a minimum thickness or the point at which the thickness deviation is maximum may be positioned slightly away from the end position P1 of the electrode plate EP depending on the process of applying slurry (or active material) to the electrode plate EP.

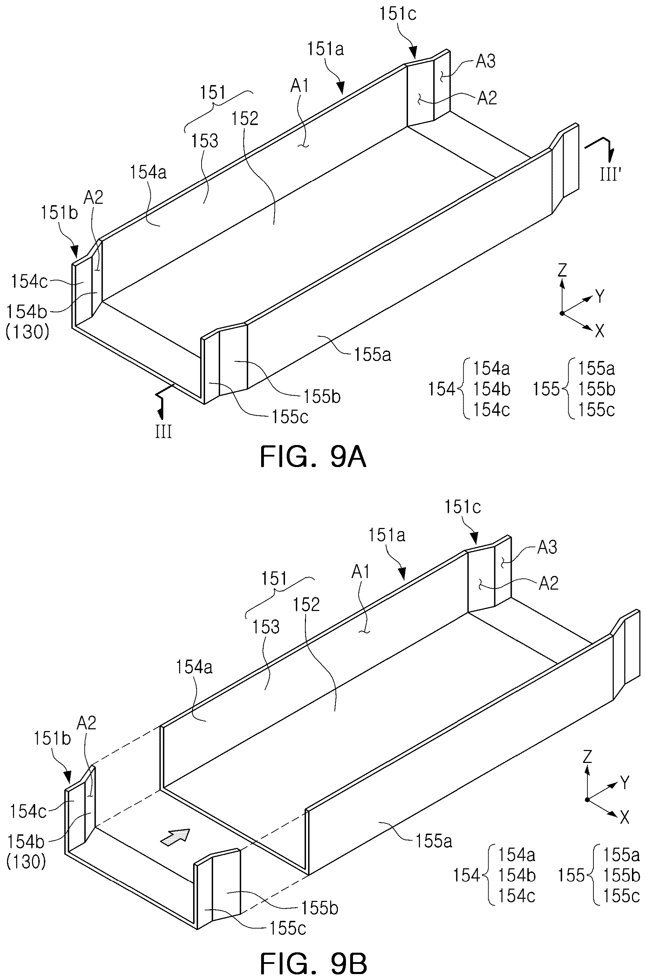

The pressurizing member 130 may have a constant thickness in the second direction Y in which the electrode lead 126 extends from the electrode assembly 124. The pressurizing member 130 may have a shape having a step difference with respect to the side plate 153. However, the shape of the pressurizing member 130 is not limited thereto, and may have an inclined surface or a curved surface (see FIGS. 9A to 10B). Also, the pressurizing member 130 may have a shape in which the outer side protrudes further toward the cell assembly 110 than the inner side in the second direction Y in which the electrode lead 126 extends from the electrode assembly 124 (see FIGS. 9A to 10B).

The thickness TP of the pressurizing member 130 may be defined as a value measured in an uncompressed state when the pressurizing member 130 is an incompressible material, and may be defined as a value measured in a compressed state of the pressurizing member 130 by a predetermined value (e.g., 60%, 80%, or a similar value) when the pressurizing member 130 is a compressible material.

When the pressurizing member 130 is an incompressible material (e.g., a rigid synthetic resin), the pressurizing member 130 may have the same to similar thickness in the pressurized state and the unpressurized state. On the other hand, when the pressurizing member 130 is a compressible material (e.g., polyurethane foam), the pressurizing member 130 may have a lower thickness in the pressurized state than in the unpressurized state. As for the pressurizing member 130 of the compressible material, it may be difficult to compress easily or the additional compression amount may be small when compressed by a predetermined value. Considering this, the thickness TP of the pressurizing member 130 of the compressible material may be determined as a value measured in a compressed state by a predetermined value (e.g., 60%, 80%, or a similar value).

The width W of the pressurizing member 130 may have a value of 0.5 to 2.0 times the width of the reduced thickness region 122b in the second direction Y in which the electrode lead 126 extends from the electrode assembly 124. The width W of the pressurizing member 130 may have a value of 0.7 to 1.5 times, 0.8 to 1.2 times, or 0.8 to 1.0 times the width of the reduced thickness region 122b. In some implementations, the pressurizing member 130 may cover more than half of the reduced thickness region 122b to compensate for the thickness of the reduced thickness region 122b and to increase the surface pressure of the reduced thickness region 122b. Also, the pressurizing member 130 may cover most or the entirety of the reduced thickness region 122b. When the width W of the pressurizing member 130 is excessively small (e.g., smaller than 0.5 times the width of the reduced thickness region 122b), the pressurizing member 130 may not sufficiently cover the reduced thickness region 122b, and accordingly, the effect of compensating for the thickness of the reduced thickness region 122b and increasing the surface pressure may be reduced. Conversely, when the width W of the pressurizing member 130 is excessively large (e.g., more than 2.0 times the width of the reduced thickness region 122b), the pressurizing member 130 may cover a wide surface area of the uniform thickness region 122a, such that the thickness of the battery cell 120 may increase and the thickness compensation effect of the reduced thickness region 122b may be reduced.

A height of the pressurizing member 130 may have a value equal to or greater than a height of the electrode plate EP provided to the electrode assembly 124. For example, the height of the pressurizing member 130 may have a value equal to or greater than the height of the positive electrode plate 124a. The pressurizing member 130 may entirely cover the electrode assembly 124 in the third direction Z, which is the height direction of the battery cell 120, in the reduced thickness region 122b. As an example, the height of the pressurizing member 130 may have a value corresponding to the height of the reduced thickness region 122b or the height of the side plate 153. Alternatively, the height of the pressurizing member 130 may be configured to have a value equal to half or more of the height of the electrode plate EP provided in the electrode assembly 124.

Since the pressurizing member 130 may be in contact with the body portion 122 of the battery cell 120, the pressurizing member 130 may include an electrically insulating material so as to be insulated from the battery cell 120. When insulation of the body portion 122 of the battery cell 120 is broken, current may flow in the pressurizing member 130 in contact with the body portion 122. In this case, the pressurizing member 130 may act as an abnormal current path. Considering this, the pressurizing member 130 may have insulating properties. The insulation performance of the pressurizing member 130 may be configured to be equal to or greater than the insulation performance of the pouch 121 or the insulation performance of the separator. For example, the insulation performance of the pressurizing member 130 may be determined to be 80 megohm or more. However, when another insulating material (e.g., compression pad 115) is disposed between the pressurizing member 130 and the body portion 122, electrical insulation of the pressurizing member 130 may not be necessary or may have a level lower than the level described above. For example, the material of the pressurizing member 130 may be a polyurethane, silicone, or rubber-based material, but may be varied.

The pressurizing member 130 may be coupled to the side plate 153. The pressurizing member 130 may be attached to the second portion A2 of the side plate 153 so as to oppose the reduced thickness region 122b. For example, the pressurizing member 130 may be configured as a pad, or the like, and may be attached to the reduced thickness region 122b. Alternatively, the pressurizing member 130 may be applied to the second portion A2 of the side plate 153 in a liquid form and may be cured. For example, the pressurizing member 130 may be formed of a curable liquid material, such as a hot melt adhesive or a thermal adhesive.

As illustrated in FIGS. 3 to 5C, when the electrode lead 126 has a shape extending from each of both sides of the electrode assembly 124 in the second direction Y, the reduced thickness region 122b may be positioned on each of both sides of the body portion 122 in the second direction Y, and the pressurizing member 130 may oppose each reduced thickness region 122b of the side plate 153.

For example, the pressurizing member 130 may be disposed in each of the second portion A2 positioned on one side in the second direction Y and the second portion A2 positioned on the other side in the second direction Y of the first side plate 154, and may be disposed in each of the second portion A2 positioned on one side in the second direction Y and the second portion A2 positioned on the other side in the second direction Y of the second side plate 155. In some implementations, four pressurizing members 130 may be disposed in the side plate 153. The pressurizing members 130 disposed on both sides in the second direction Y of the side plate 153 may be spaced apart from each other with the first portion A1 therebetween.

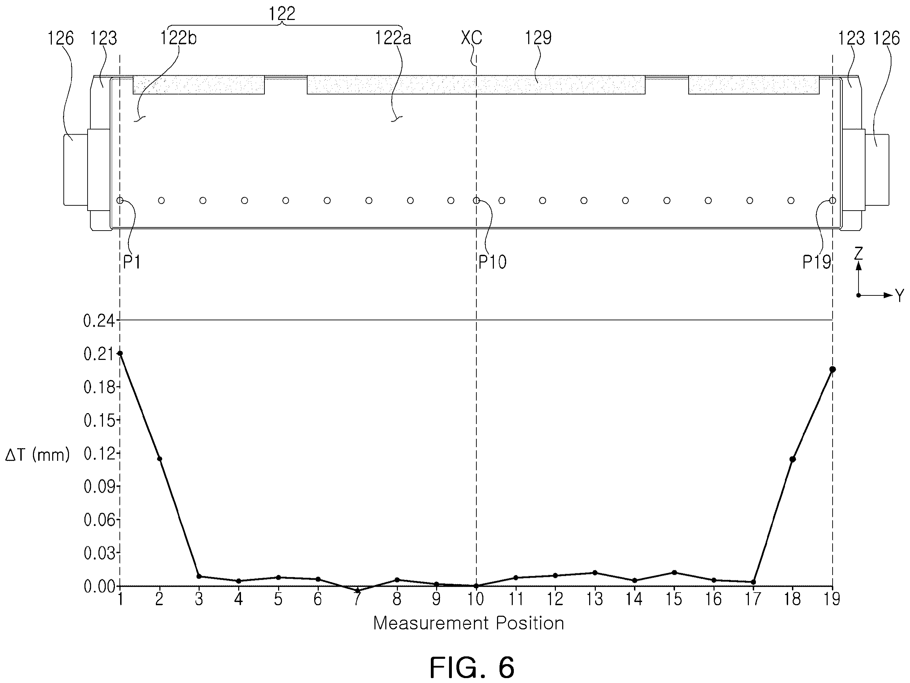

FIG. 6 is a graph illustrating a thickness deviation $\Delta T$ of an electrode assembly (124 in FIG. 4) in a battery cell 120 based on an embodiment, and FIG. 7 is a view illustrating a thickness change of an electrode assembly 124 in a portion in which an electrode lead 126 is disposed. FIG. 7 illustrates an internal state of a battery cell 120 when the battery cell 120 is pressurized by a pressurizing pad CP. FIGS. 8A and 8B illustrate an electrode plate EP. Specifically, FIG. 8A is a plan view illustrating the electrode plate EP, and FIG. 8B is a cross-sectional view illustrating the electrode plate EP.

Referring to FIG. 6 together with FIG. 4, the thickness of the electrode assembly 124 of the battery cell 120 may change depending on a position. The upper view in FIG. 6 indicates 19 measurement positions P1 to P19 for measuring the thickness of the electrode assembly 124 in the second direction Y in which the electrode lead 126 extends, and the lower graph indicates the thickness deviation $\Delta T$ measured at each measurement position P1 to P19 in mm (millimeter). The measurement position P1 may be the end position of the first electrode plate (e.g., positive electrode plate), the measurement position P19 may be the end position of the second electrode plate (e.g., negative electrode plate), and the measurement position P10 may be the exact center (XC) of the electrode assembly 124. The graph in FIG. 6 indicates the thickness deviation $\Delta T$ in each measurement position compared to the thickness of the electrode assembly 124 at P10, which is the exact center of the electrode assembly 124.

As illustrated in the graph in FIG. 6, the electrode assembly 124 may have a relatively uniform thickness in the uniform thickness region 122a of the body portion 122, but the thickness of the electrode assembly 124 may be reduced in the reduced thickness region 122b adjacent to the electrode lead 126. Since the battery cell 120 illustrated in FIG. 6 has the electrode leads 126 positioned on both sides of the body portion 122, the reduced thickness region 122b may be formed on each of both sides of the body portion 122.

As illustrated in FIG. 7, the thickness of the electrode assembly 124 may be reduced in the reduced thickness region 122b. In some implementations, the thickness T2 of the electrode assembly 124 in the reduced thickness region 122b may have a value smaller than that of the thickness T1 of the electrode assembly 124 in the uniform thickness region 122a. As an example, the thickness T2 of the electrode assembly 124 in the reduced thickness region 122b may decrease toward a position adjacent to the electrode lead 126. The thickness T2 of the electrode assembly 124 in the reduced thickness region 122b may have a minimum value in the end position P1 of the electrode plate EP.

The reason why the thickness of the electrode assembly 124 decreases in the portion adjacent to the electrode lead 126 may be described with reference to FIGS. 8A and 8B.

In the electrode plates (positive electrode plate and negative electrode plate) EP included in the electrode assembly 124, slurry RM may be applied to a current collector CC formed of aluminum or copper material. The slurry RM may include an active material, a conductive material, and a binder, and may be applied to both surfaces of the current collector CC. The electrode plate EP may be divided into a coating area (coating area) R1 to which slurry RM including an active material is applied, and a non-coating area R2 to which slurry RM is not applied. The non-coating area R2 may have a predetermined width Lb, may be cut into a predetermined shape and may form an electrode tab (125 in FIG. 4). The coating area R1 may form a wide surface of the electrode plate EP. Each of the coating area R1 and the non-coating area R2 may be cut based on the cutting line CL so as to have a height corresponding to one electrode plate EP.

The non-coating area R2 may include a first non-coating area R21 disposed on one side of the electrode plate EP and a second non-coating area R22 disposed on the other side of the electrode plate EP. The first non-coating area R21 may be provided as a positive electrode tab in a positive electrode plate, and the second non-coating area R22 may be provided as a negative electrode tab in a negative electrode plate.

Since the slurry RM has a fluid state, the slurry RM may flow down from the edge portion R12 on both sides by a weight thereof, and accordingly, the thickness of the edge portion R12 on both sides may have a shape smaller than the thickness of the central portion R11. For example, the edge portion R12 on both sides may have an inclined shape. In this case, the edge portion R12 on both sides may have the smallest thickness at a boundary line BL with the non-coating area R2. The edge portion R12 on both sides may be formed throughout a predetermined width La. When the electrode plates EP are stacked and form the electrode assembly 124, the edge portion R12 on both sides may oppose the reduced thickness region 122b of the body portion 122, and the width La of the edge portion R12 may correspond to the width (W in FIG. 5B) of the pressurizing member (130 in FIG. 5A).

Referring back to FIG. 7, a distance T1 between the electrode assembly 124 and the body portion 122 in the end position P1 of the reduced thickness region 122b may be formed to be greater than a distance T2 between the electrode assembly 124 and the body portion 122 in a portion adjacent to the uniform thickness region 122a. Accordingly, a space S2 in which the electrode assembly 124 is not positioned may be formed between the body portion 122 and the electrode assembly 124 in the reduced thickness region 122b. Due to this space S2, the surface pressure PS1 applied to the electrode assembly 124 in the reduced thickness region 122b may have a value smaller than that of the surface pressure PS2 applied to the electrode assembly 124 in the uniform thickness region 122a. Accordingly, in the battery cell 120, a surface pressure PS1 of the reduced thickness region 122b may be non-uniform as compared to the uniform thickness region 122a. In the portion having a low surface pressure or pressurization force, a distance between the electrode plates EP may be greater than in other positions, such that resistance between the electrode plates EP may increase as the electrolyte decreases. When the resistance between the electrode plates EP increases, lithium plating, which rapidly reduces the lifespan of the battery cell 120, may occur.

In an embodiment, by disposing the pressurizing member (130 in FIG. 5A) in the portion opposing the reduced thickness region 122b, the surface pressure or pressurization force applied to the electrode assembly 124 may be increased in the reduced thickness region 122b. Also, the pressurizing member 130 may reduce the size of the space S2 generated in the reduced thickness region 122b, thereby reducing resistance between the electrode plates EP, and may alleviate or delay the lithium plating occurring in the electrode assembly (positive electrode plate) in the reduced thickness region 122b. Accordingly, based on an embodiment, the issue of rapidly reducing the lifespan of the battery cell 120 may be addressed.

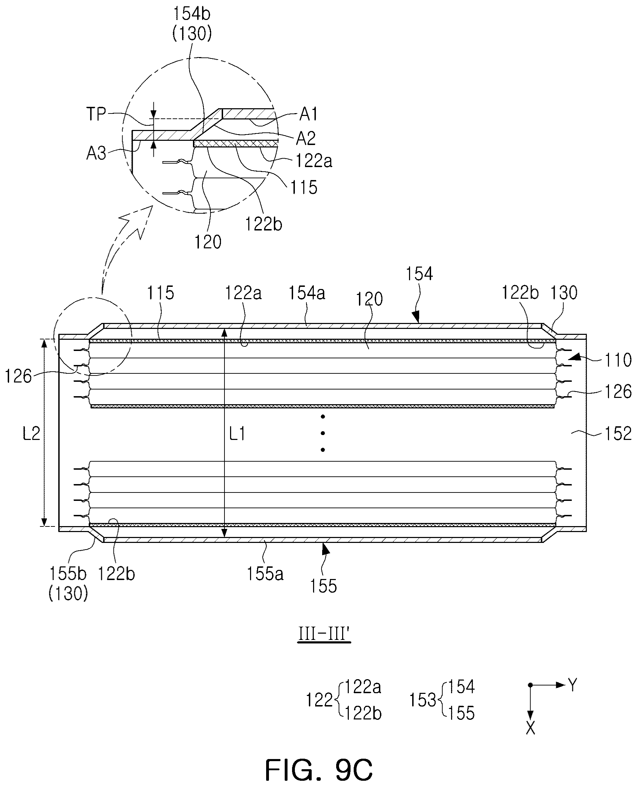

FIG. 9A is a perspective view illustrating a modified example of a housing body 151 and a pressurizing member 130 illustrated in FIGS. 5A to 5C, FIG. 9B is a perspective view illustrating a state in which the housing body 151 illustrated in FIG. 9A is separated, and FIG. 9C is a cross-sectional view taken along line III-III' in FIG. 9A. FIG. 9C illustrates a state before the cell assembly 110 is pressurized by the pressurizing member 130 in order to clearly represent a portion in which the pressurizing member 130 pressurizes the cell assembly 110.

Referring to FIGS. 9A to 9C, a side plate 153 may be provided as a portion of the module housing 150, and the module housing 150 may include a housing body 151 including a first side plate 154, a second side plate 155, and a base plate 152 connecting the first side plate 154 to the second side plate 155.

The housing body 151 may include a base plate 152 supporting a lower portion of the cell assembly 110, and a side plate 153 extending from both ends of the base plate 152 in the third direction Z and supporting a side surface of the cell assembly 110.

As compared to the housing body 151 illustrated in FIGS. 5A to 5C, the housing body 151 illustrated in FIGS. 9A to 9C may be different in that the pressurizing member 130 is integrated with the side plate 153. Also, the housing body 151 illustrated in FIGS. 9A to 9C may be different in that the housing body 151 may have a split structure. The description of the housing body 151 and the pressurizing member 130 illustrated in FIGS. 5A to 5C may also be applied to FIGS. 9A to 9C.

The side plate 153 may include a first side plate 154 and a second side plate 155 disposed on both sides of the cell assembly 110, respectively. The first side plate 154 may cover one side of the cell assembly 110 in the first direction X, and the second side plate 155 may cover the other side of the cell assembly 110 in the first direction X.

The pressurizing member 130 may be provided on the inner side of the side plate 153 and may pressurize the cell assembly 110 in a portion adjacent to the electrode lead 126. The side plate 153 may include the first side plate 154 and the second side plate 155, which are disposed on both sides of the cell assembly 110, respectively, and the pressurizing member 130 may be disposed on each of the first side plate 154 and the second side plate 155.

The pressurizing member 130 may be integrated with the side plate 153.

As an example, the side plate 153 may include a first portion A1 opposing the uniform thickness region 122a of the body portion 122 in the first direction X, and a second portion A2 opposing the reduced thickness region 122b of the body portion 122 in the first direction X, and the pressurizing member 130 may be provided as the second portion A2 of the side plate 153. The side plate 153 may further include a third portion A3 disposed on the outer side of the second portion A2 in the second direction Y.

The pressurizing member 130 may be provided as a protrusion formed on the inner side surface of the side plate 153. The second portion A2 of the side plate 153 may have a shape protruding more toward the cell assembly 110 than the first portion A1. The pressurizing member 130 may be configured as a protrusion forming the second portion A2 of the side plate 153.

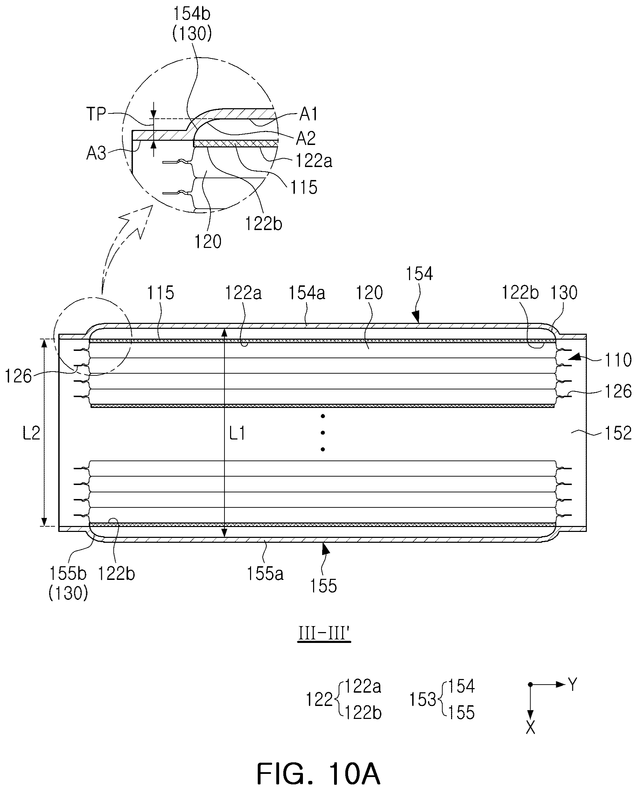

The pressurizing member 130 may be provided as an inclined surface or a curved surface formed on the inner side surface of the side plate 153. For example, as illustrated in FIGS. 9A to 9C, the pressurizing member 130 may be provided as a second portion A2 including an inclined surface. Alternatively, the pressurizing member 130 may be provided as a second portion A2 including a curved surface (see FIG. 10A).

The pressurizing member 130 may have a shape in which the outer side protrudes further toward the cell assembly 110 than the inner side in the second direction Y in which the electrode lead 126 extends from the electrode assembly 124. In the reduced thickness region 122b of the body portion 122, the thickness of a portion of the electrode assembly 124 closer to the electrode lead 126 may be lower, the pressurizing member 130 may have a shape in which the outer side closer to the electrode lead 126 protrudes more toward the cell assembly 110 than the inner side farther from the electrode lead 126. For example, the inclined surface or curved surface included in the second portion A2 may have a shape of being away from the first portion A1 in the first direction X toward the outer side closer to the electrode lead 126.

The housing body 151 may be divided into at least two parts, and at least two parts may be configured to be coupled to each other in the second direction Y in which the electrode lead 126 extends from the electrode assembly 124. The housing body 151 may include a first body 151a including a first portion A1, a second body 151b connected to one side of the first body 151a and including a second portion A2, and a third body 151c connected to the other side of the first body 151a and including a second portion A2. The first body 151a, the second body 151b and the third body 151c may be divided into at least two parts.

The first side plate 154 may include a central portion 154a forming the first portion A1, a pressurizing portion 154b forming the second portion A2, and an outer side portion 154c forming the third portion A3. Similarly, the second side plate 155 may include a central portion 155a forming a first portion A1, a pressurizing portion 155b forming a second portion A2, and an outer side portion 155c forming a third portion A3.

The side plate 153 may include a first portion A1 opposing a uniform thickness region 122a of the body portion 122 in the first direction X, and a second portion A2 opposing a reduced thickness region 122b of the body portion 122 in the first direction X, and at least two parts may be divided by a boundary between the first portion A1 and the second portion A2. For example, the first side plate 154 may be divided by a boundary between the central portion 154a and the pressurizing portion 154b, and the second side plate 155 may also be divided by a boundary between the central portion 155a and the pressurizing portion 155b

The first body 151a, the second body 151b and the third body 151c may be divided into at least two parts and may be coupled to each other. For example, the second body 151b may be divided into the first body 151a and the third body 151c. Alternatively, the first body 151a, the second body 151b and the third body 151c may be divided into three parts and may be coupled to each other.

When the cell assembly 110 is arranged in the first body 151a, the cell assembly 110 may be inserted into the inner side of the first body 151a in the direction of the arrow in FIG. 9B. While the cell assembly 110 is disposed on the inner side of the first body 151a, the second body 151b may move in the direction of the arrow in FIG. 9B and may compress the reduced thickness region 122b of the cell assembly 110 to the second body 151b. In some implementations, in the process of coupling the second body 151b to the first body 151a, the thickness of the cell assembly 110 corresponding to the reduced thickness region 122b may be easily compressed to the thickness of the pressurizing member 130. Accordingly, when the housing body 151 is divided into at least two parts and the at least two parts are coupled to each other, the cell assembly 110 may be easily assembled to the housing body 151.

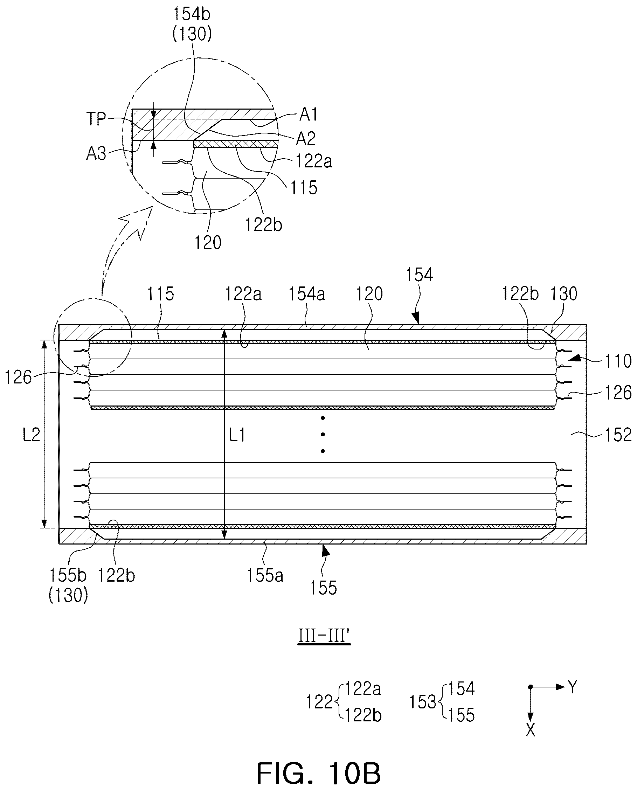

FIGS. 10A and 10B are cross-sectional views illustrating a modified example illustrated in FIG. 9C. FIGS. 10A and 10B illustrate a state before the cell assembly 110 is pressed by the pressurizing member 130 in order to clearly represent the portion in which the pressurizing member 130 presses the cell assembly 110.

Compared with FIGS. 9A to 9C, FIG. 10A may be different in that the pressurizing portion 154b of the first side plate 154 and the pressurizing portion 155b of the second side plate 155, which are included in the pressurizing member 130, form curved surfaces.

Compared with FIGS. 9A to 9C, FIG. 10b may be different in that the outer side surface of the side plate 153 may have a flat surface. The thickness of the side plate 153 of the second portion A2 and the third portion A3 may have a value greater than that of the thickness of the side plate 153 of the first portion A1.

The description of the housing body 151 and the pressurizing member 130 illustrated in FIGS. 5A to 5C and FIGS. 9A to 9C may also be applied to FIGS. 10A and 10B other than the differences.

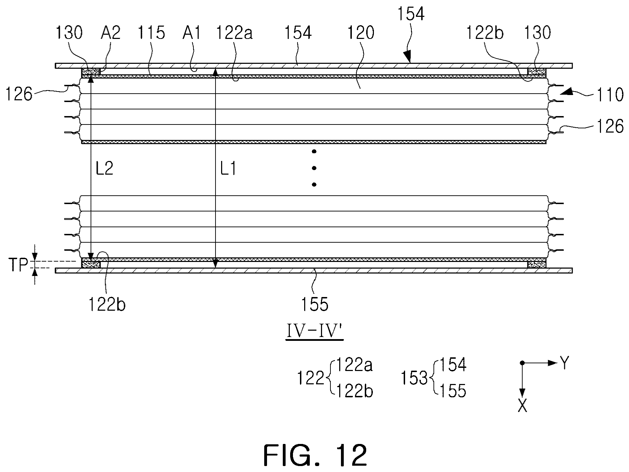

FIG. 11 is an exploded perspective view illustrating a battery module 100a based on another embodiment, and FIG. 12 is a cross-sectional view taken along line IV-IV' in FIG. 11. FIG. 12 illustrates a state before the cell assembly 110 is pressurized by the pressurizing member 130 in order to clearly represent a portion in which the pressurizing member 130 pressurizes the cell assembly 110.

The battery module 100a illustrated in FIGS. 11 and 12 may include a cell assembly 110 in which the plurality of battery cells 120 are arranged in the first direction X, a side plate 153 respectively covering both sides of the cell assembly 110 in the first direction X, and a pressurizing member 130 provided on an inner side of the side plate 153 and pressurizing the cell assembly 110 in a portion adjacent to the electrode lead 126. The battery module 100a may include a busbar assembly 140 having a busbar 145 connected to an electrode lead 126 of a battery cell 120 and a support plate 141 supporting the busbar 145.

Compared to the battery module 100 illustrated in FIGS. 1 to 5C, the battery module 100a illustrated in FIGS. 11 and 12 may have a difference in the structure of the housing body 151. In some implementations, the side plate 153 provided in the housing body 151 of the battery module 100a illustrated in FIGS. 11 and 12 may include a first side plate 154 and a second side plate 155 disposed on both sides of the cell assembly 110, respectively, and the first side plate 154 and the second side plate 155 may be separated from each other. In some implementations, the first side plate 154 and the second side plate 155 illustrated in FIGS. 11 and 12 may be different from the battery module 100 illustrated in FIGS. 1 to 5C in that the first side plate 154 and the second side plate 155 are not connected to each other by the base plate (152 in FIG. 2).

The first side plate 154 and the second side plate 155 may be fixed to the busbar assembly 140 while covering both sides of the cell assembly 110. The fastening structure maintaining the state in which the side plate 153 covers both sides of the cell assembly 110 may be varied.

The pressurizing member 130 may be disposed in at least a portion of the second portion A2 of the side plate 153. The pressurizing member 130 may be coupled to the side plate 153.

The pressurizing member 130 may have a constant thickness in the second direction Y in which the electrode lead 126 extends.

The description in FIGS. 1 to 8B may also be applied to the battery module 100a in FIGS. 11 and 12.

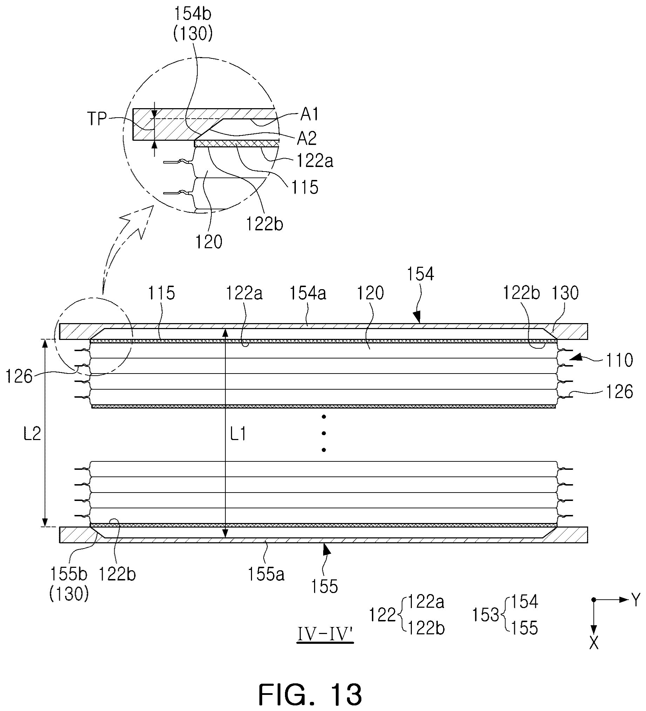

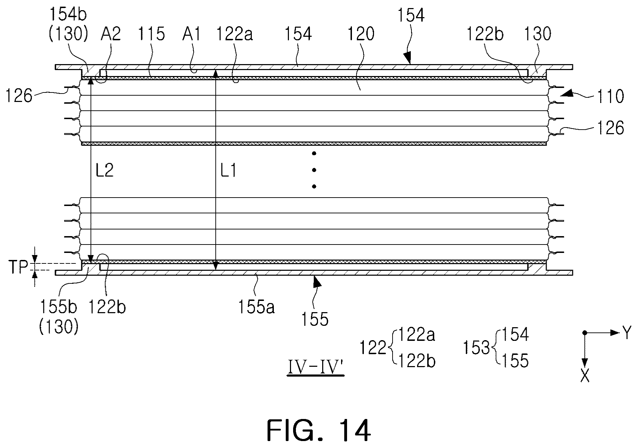

FIGS. 13 and 14 are cross-sectional views illustrating a modified example in FIG. 12. FIGS. 13 and 14 illustrate a state before the cell assembly 110 is pressurized by the pressurizing member 130 in order to clearly represent a portion in which the pressurizing member 130 pressurizes the cell assembly 110.

Compared to the pressurizing member 130 in FIG. 12, the pressurizing member 130 illustrated in FIGS. 13 and 14 may be different in that the pressurizing member 130 may be integrated with the side plate 153. The pressurizing member 130 may be provided as a protrusion formed on the inner side surface of the side plate 153.

The pressurizing member 130 illustrated in FIG. 13 may be provided as an inclined surface formed on the inner side surface of the side plate 153, or may be provided as a curved surface. The pressurizing member 130 may have a shape in which the outer side protrudes more toward the cell assembly 110 than the inner side in the second direction Y in which the electrode lead 126 extends.

The side plate 153 may include a first portion A1 opposing the uniform thickness region 122a of the body portion 122 in the first direction X, and a second portion A2 opposing the reduced thickness region 122b of the body portion 122 in the first direction X. The first side plate 154 may include a central portion 154a forming a first portion A1 and a pressurizing portion 154b forming a second portion A2, and the second side plate 155 may include a central portion 155a forming a first portion A1 and a pressurizing portion 155b forming a second portion A2.

The pressurizing member 130 may be provided as a second portion A2 of the side plate 153. The pressurizing member 130 may correspond to the pressurizing portion 154b of the first side plate 154 and the pressurizing portion 155b of the second side plate 155.

The pressurizing member 130 illustrated in FIG. 14 may be integrated with the side plate 153 and may be provided as a protrusion formed on the inner side surface of the side plate 153. The pressurizing member 130 may have a constant thickness in the second direction Y in which the electrode lead 126 extends.

The description of the housing body 151 and the pressurizing member 130 illustrated in FIGS. 5A to 5C and FIGS. 9a to 12 may also be applied to FIGS. 13 and 14 other than the differences.

FIGS. 15A and 15B are views illustrating a battery cell based on another embodiment. FIGS. 15A and 15B are views illustrating a battery cell 120a in which the electrode lead 126 is disposed on one side of the pouch 121.

The battery cell 120a illustrated in FIG. 15A and the battery cell 120a illustrated in FIG. 15B may have a shape in which the electrode lead 126 is disposed on one side of the pouch 121 or the body portion 122. In some implementations, the positive electrode lead 126a and the negative electrode lead 126b may be disposed on one side of the pouch 121. In this case, the reduced thickness region 122b may be formed adjacent to the portion in which the electrode lead 126 is disposed, and the uniform thickness region 122a may be formed in a position spaced apart from the electrode lead 126, e.g., in a position out of the reduced thickness region 122b.

In an embodiment including the battery cell 120a illustrated in FIG. 15A or FIG. 15B, the electrode lead 126 may have a shape extending from one side of the electrode assembly 124 in the second direction Y, the reduced thickness region 122b may be positioned on one side in the second direction Y of the body portion 122, and the pressurizing member (130 in FIG. 5A) may be disposed on one side in the second direction Y of the side plate 153 opposing the reduced thickness region 122b positioned on one side in the second direction Y of the body portion 122.

For example, when the side plate 153 illustrated in FIG. 5A is provided to the battery cell 120a illustrated in FIG. 15A or FIG. 15B, the pressurizing member 130 may be disposed one by one in the first side plate 154 and the second side plate 155 opposing the reduced thickness region 122b.

In the battery cell 120a illustrated in FIGS. 15A and 15B, by disposing the pressurizing member 130 in the side plate 153 opposing the reduced thickness region 122b adjacent to the electrode lead 126, the surface pressure or pressurizing force applied to the electrode assembly 124 in the reduced thickness region 122b may be increased, and the lithium plating occurring in the electrode assembly in the reduced thickness region 122b may be alleviated or delayed, thereby improving the issue of the rapid deterioration of the lifespan of the battery cell 120a.

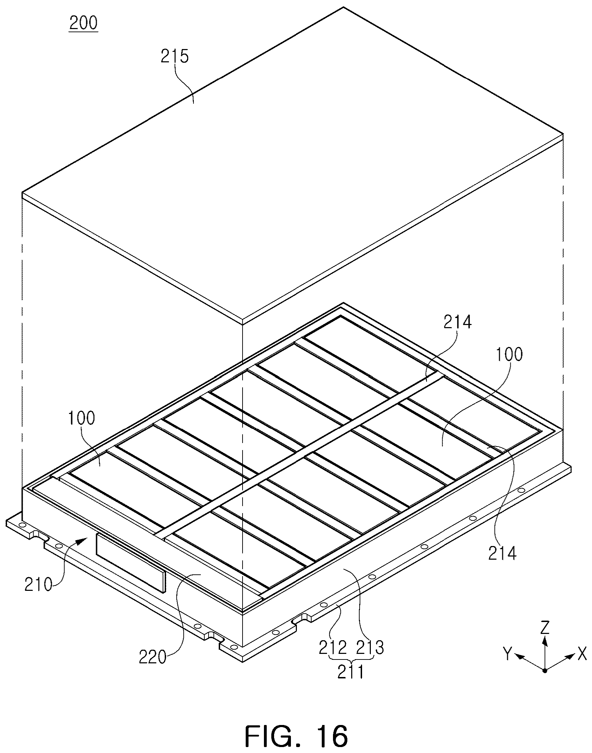

FIG. 16 is an exploded perspective view illustrating a battery pack 200 based on an embodiment.

Referring to FIG. 16, the battery pack 200 may include a plurality of battery modules 100 and a pack housing 210 accommodating a plurality of battery modules 100. The description of the battery module 100 described in FIGS. 1 to 15B may be applied to the battery module 100 in FIG. 16.

The pack housing 210 may accommodate components installed in the battery pack 200, such as the battery module 100. The pack housing 210 may include a housing body 211 supporting the battery module 100 and a pack cover 215 covering the housing body 211. The housing body 211 may include a bottom member 212 and a sidewall 213. The pack housing 210 may include a partition wall 214 crossing the space in which the battery module 100 is installed. For example, the accommodate space of the pack housing 210 may be divided into a plurality of spaces by the partition wall 214. The partition wall 214 may be installed across the accommodate space to reinforce rigidity of the pack housing 210.

The battery pack 200 may include a battery control portion 220 for controlling the battery module 100. The battery control portion 220 may be disposed in the pack housing 210. The battery control portion 220 may include a battery management system (BMS). The configuration of the battery control portion 220 is disclosed in various forms, and thus, a detailed description thereof may not be provided. In an embodiment, the battery control portion 220 may be referred to as a processor.

Based on the embodiments discussed above, the lifespan of a battery module and/or a battery pack may be extended.

In addition, the issue of rapid capacity degradation or a sharp decrease in resistance in a battery cell provided in a battery module may be addressed.

In addition, the pressurizing member may be disposed on the inner side of the side plate, and the reduction in the energy density of the battery module may be minimized due to the arrangement of the pressurizing member.

Only specific examples of implementations of certain embodiments are described. Variations, improvements and enhancements of the disclosed embodiments and other embodiments may be made based on the disclosure of this patent document.

The present disclosure also relates to the following aspects.

Aspect 1) A battery module, comprising: a cell assembly including a plurality of battery cells, each battery cell including a body portion configured to accommodate an electrode assembly and an electrode lead electrically connected to the electrode assembly, the plurality of battery cells being arranged relative to each other in a first direction; a side plate extending to be disposed on at least one side of the cell assembly in the first direction; and a pressurizing member disposed on an inner side of the side plate and configured to apply pressure to a portion of the cell assembly adjacent to the electrode lead.

Aspect 2) In aspect 1, wherein the body portion includes a uniform thickness region at or near a center of the body portion, and a reduced thickness region disposed closer to the electrode lead than the uniform thickness region, wherein the side plate includes: a first portion opposing the uniform thickness region in the first direction; and a second portion opposing the reduced thickness region in the first direction, and wherein the pressurizing member is disposed in at least a portion of the second portion and is not disposed in at least a portion of the first portion.

Aspect 3) In aspect 1 or 2, wherein the side plate includes a first side plate and a second side plate disposed on the two opposite sides of the cell assembly, respectively, and wherein a distance between the first side plate and the second side plate at a central portion of the side plate is defined as a first distance, and a minimum distance between a pressurizing member disposed on the first side plate and a pressurizing member disposed on the second side plate is defined as a second distance, wherein the first distance is greater than the second distance.

Aspect 4) In aspect 3, wherein a difference between an average thickness of the electrode assembly in the uniform thickness region and a minimum thickness of the electrode assembly in the reduced thickness region is defined as a maximum thickness deviation, and wherein the first distance and the second distance satisfy the following range: $L1 - (dTm \times N) \leq L2 \leq L1 - dTm$ where L1 is the first distance, L2 is the second distance, dTm is the maximum thickness deviation, and N is a number of battery cells included in the cell assembly.

Aspect 5) In any one of aspects 1 to 4, wherein the pressurizing member is integrally formed with the side plate.

Aspect 6) In any one of aspects 1 to 5, wherein the pressurizing member is formed as a protrusion on an inner side surface of the side plate and/or as an inclined surface or a curved surface on an inner side surface of the side plate.

Aspect 7) In any one of aspects 1 to 5, wherein the side plate includes: a first portion opposing a uniform thickness region of the body portion in the first direction; and a second portion opposing a reduced thickness region of the body portion in the first direction, and wherein the pressurizing member is formed as the second portion of the side plate.

Aspect 8) In any one of aspects 1 to 7, wherein the pressurizing member has a constant thickness in a second direction in which the electrode lead extends from the electrode assembly.

Aspect 9) In any one of aspects 1 to 7, wherein the pressurizing member has a shape such that an outer side of the pressurizing member protrudes further toward the cell assembly than an inner side of the pressurizing member in a second direction in which the electrode lead extends from the electrode assembly.

Aspect 10) In any one of aspects 1 to 9, wherein the side plate includes a first side plate and a second side plate disposed on the two opposite sides of the cell assembly, respectively, and wherein the pressurizing member is disposed on each of the first side plate and the second side plate.

Aspect 11) In aspect 10, wherein the side plate constitutes a portion of a module housing, wherein the module housing includes a housing body including the first side plate, the second side plate, and a base plate connecting the first side plate to the second side plate, and wherein the housing body is divided into at least two parts, and the at least two parts of the housing body are configured to be coupled to each other in a second direction in which the electrode leads extend from the electrode assembly.

Aspect 12) In aspect 11, wherein the side plate includes a first portion opposing a uniform thickness region of the body portion in the first direction, and a second portion opposing a reduced thickness region of the body portion in the first direction and connected to the first portion, and wherein the at least two parts are divided at a boundary between the first portion and the second portion.

Aspect 13) In any one of aspects 2 to 4, wherein the electrode lead extends from each of two opposite sides of the electrode assembly in the second direction, wherein the reduced thickness region is positioned on each of two opposite sides of the body portion in the second direction, and wherein the pressurizing member is disposed in the side plate to oppose each reduced thickness region.

Aspect 14) In any one of aspects 2 to 4, wherein the electrode lead extends from one side of the electrode assembly in the second direction, wherein the reduced thickness region is positioned on one side of the body portion in the second direction, and wherein the pressurizing member is disposed on one side of the side plate in the second direction to oppose the reduced thickness region positioned on the one side of the body portion in the second direction.

Aspect 15) A battery pack, comprising: a plurality of battery modules; and a pack housing configured to accommodate the plurality of battery modules, wherein at least one of the plurality of battery modules includes: a cell assembly including a plurality of battery cells, each battery cell including a body portion configured to accommodate an electrode assembly and an electrode lead electrically connected to the electrode assembly, the plurality of battery cells being arranged relative to each other in a first direction; a side plate extending to be disposed on at least one side of the cell assembly in the first direction; and a pressurizing member disposed on an inner side of the side plate and configured to apply pressure to a portion of the cell assembly adjacent to the electrode lead.

## Claims

1.  A battery module, comprising:

    a cell assembly including a plurality of battery cells, each battery cell including a body portion configured to accommodate an electrode assembly and an electrode lead electrically connected to the electrode assembly, the plurality of battery cells being arranged relative to each other in a first direction;

a side plate extending to be disposed on at least one side of the cell assembly in the first direction; and

a pressurizing member disposed on an inner side of the side plate and configured to apply pressure to a portion of the cell assembly adjacent to the electrode lead.

2. The battery module of claim 1,

wherein the body portion includes a uniform thickness region at or near a center of the body portion, and a reduced thickness region disposed closer to the electrode lead than the uniform thickness region,

wherein the side plate includes: a first portion opposing the uniform thickness region in the first direction; and a second portion opposing the reduced thickness region in the first direction, and

wherein the pressurizing member is disposed in at least a portion of the second portion and is not disposed in at least a portion of the first portion.

3. The battery module of claim 1 or 2,

wherein the side plate includes a first side plate and a second side plate disposed on the two opposite sides of the cell assembly, respectively, and

wherein a distance between the first side plate and the second side plate at a central portion of the side plate is defined as a first distance, and a minimum distance between a pressurizing member disposed on the first side plate and a pressurizing member disposed on the second side plate is defined as a second distance, wherein the first distance is greater than the second distance.

4. The battery module of claim 3,

wherein a difference between an average thickness of the electrode assembly in the uniform thickness region and a minimum thickness of the electrode assembly in the reduced thickness region is defined as a maximum thickness deviation, and wherein the first distance and the second distance satisfy the following range:

$$L1 - (dTm \times N) \leq L2 \leq L1 - dTm$$

where L1 is the first distance, L2 is the second distance, dTm is the maximum thickness deviation, and N is a number of battery cells included in the cell assembly.

5. The battery module of any one of claims 1 to 4, wherein the pressurizing member is integrally formed with the side plate.

6. The battery module of any one of claims 1 to 5, wherein the pressurizing member is formed as a protrusion on an inner side surface of the side plate and/or as an inclined surface or a curved surface on an inner side surface of the side plate.

7. The battery module of any one of claims 1 to 5,

wherein the side plate includes: a first portion opposing a uniform thickness region of the body portion in the first direction; and a second portion opposing a reduced thickness region of the body portion in the first direction, and

wherein the pressurizing member is formed as the second portion of the side plate.

8. The battery module of any one of claims 1 to 7, wherein the pressurizing member has a constant thickness in a second direction in which the electrode lead extends from the electrode assembly.

9. The battery module of any one of claims 1 to 7, wherein the pressurizing member has a shape such that an outer side of the pressurizing member protrudes further toward the cell assembly than an inner side of the pressurizing member in a second direction in which the electrode lead extends from the electrode assembly.

10. The battery module of any one of claims 1 to 9,

wherein the side plate includes a first side plate and a second side plate disposed on the two opposite sides of the cell assembly, respectively, and

wherein the pressurizing member is disposed on each of the first side plate and the second side plate.

11. The battery module of claim 10,

wherein the side plate constitutes a portion of a module housing,

wherein the module housing includes a housing body including the first side plate, the second side plate, and a base plate connecting the first side plate to the second side plate, and

wherein the housing body is divided into at least two parts, and the at least two parts of the housing body are configured to be coupled to each other in a second direction in which the electrode leads extend from the electrode assembly.

12. The battery module of claim 11,

wherein the side plate includes a first portion opposing a uniform thickness region of the body portion in the first direction, and a second portion opposing a reduced thickness region of the body portion in the first direction and connected to the first portion, and

wherein the at least two parts are divided at a boundary between the first portion and the second portion.

13. The battery module of any one of claims 2 to 4,

wherein the electrode lead extends from each of two opposite sides of the electrode assembly in the second direction,

wherein the reduced thickness region is positioned on each of two opposite sides of the body portion in the second direction, and

wherein the pressurizing member is disposed in the side plate to oppose each reduced thickness region.

14. The battery module of any one of claims 2 to 4,

wherein the electrode lead extends from one side of the electrode assembly in the second direction,

wherein the reduced thickness region is positioned on one side of the body portion in the second direction, and

wherein the pressurizing member is disposed on one side of the side plate in the second direction to oppose the reduced thickness region positioned on the one side of the body portion in the second direction.

15. A battery pack, comprising:

a plurality of battery modules; and
a pack housing configured to accommodate the plurality of battery modules,
wherein at least one of the plurality of battery modules includes:

a cell assembly including a plurality of battery cells, each battery cell including a body portion configured to accommodate an electrode assembly and an electrode lead electrically connected to the electrode assembly, the plurality of battery cells being arranged relative to each other in a first direction;
a side plate extending to be disposed on at least one side of the cell assembly in the first direction; and
a pressurizing member disposed on an inner side of the side plate and configured to apply pressure to a portion of the cell assembly adjacent to the electrode lead.

FIG. 1

100

156

110

140
145 141

157

126
147

146
157a

154

130

130
153
151
152

155

121(122)
120

115

140
141

157

150 { 151
156
157

153 { 154
155

Z
Y
X

FIG. 2

120

123
123b 123a

129

122

123c

122b

126b
127

123a

126a
127

122a    121

I

122b

Z
Y
X

122 { 122a
      122b

126 { 126a
      126b

FIG. 3

I-I'

FIG. 4

EP 4 672 464 A1

FIG. 5A

FIG. 5B

FIG. 5C

FIG. 6

EP 4 672 464 A1

FIG. 7

FIG. 8A

EP

BL

R1

R2 CL

CL

R21

R22

CL

FIG. 8B

Lb La

RM

La Lb

R12 R11

RM

CC

Y

X

EP 4 672 464 A1

FIG. 9A

FIG. 9B

FIG. 9C

154b
(130)

TP

A3

A1
A2
122a
115
122b

120

115  122a  154a  120  154  122b  130

126

L2  L1

110
126
152

155b  122b
(130)

155a  155

III-III'

122 { 122a
      122b

153 { 154
      155

Y
X

# FIG. 10A

III–III'

$122\begin{cases}122a\\122b\end{cases}$    $153\begin{cases}154\\155\end{cases}$

FIG. 10B

FIG. 11

FIG. 12

FIG. 13

FIG. 14

120a

FIG. 15A

120a

FIG. 15B

FIG. 16

Europäisches
Patentamt

European
Patent Office

Office européen
des brevets

# EUROPEAN SEARCH REPORT

Application Number

EP 25 17 4954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/107678 A1 (KIM DUK-JUNG [KR] ET AL) 3 May 2012 (2012-05-03) * paragraphs [0066] - [0072]; figures 5,6 * ----- | 1-10, 13-15 | INV. H01M50/289 |
| X | CN 206 849 914 U (MICROVAST POWER SYSTEMS HUZHOU CO LTD) 5 January 2018 (2018-01-05) * paragraphs [0057] - [0060]; figures 1,2,6,7 * ----- | 1,2,5,8, 10 | |
| X | US 2018/309101 A1 (NAKAI MASAYUKI [JP] ET AL) 25 October 2018 (2018-10-25) * paragraphs [0044], [0045]; figure 6 * ----- | 1,6,7,15 | |
| X | WO 2023/075416 A1 (LG ENERGY SOLUTION LTD [KR]) 4 May 2023 (2023-05-04) * paragraphs [0086], [0095] - [0097]; figures 5,6 * ----- | 1,15 | |
| X | US 2023/207941 A1 (PARK JIN-YONG [KR] ET AL) 29 June 2023 (2023-06-29) * paragraphs [0081] - [0083]; figures 2-4 * ----- | 1,15 | TECHNICAL FIELDS SEARCHED (IPC) |
| A | | 2-14 | H01M |

The present search report has been drawn up for all claims

| Place of search | Date of completion of the search | Examiner |
|---|---|---|
| The Hague | 25 November 2025 | Steinhauser, Udo |

EPO FORM 1503 03.82 (P04C01)

## ANNEX TO THE EUROPEAN SEARCH REPORT
## ON EUROPEAN PATENT APPLICATION NO.

EP 25 17 4954

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2025

| Patent document cited in search report | Publication date | Patent family member(s) | Publication date |
|---|---|---|---|
| US 2012107678 A1 | 03-05-2012 | CN 102456909 A | 16-05-2012 |
| | | EP 2450977 A1 | 09-05-2012 |
| | | JP 6279200 B2 | 14-02-2018 |
| | | JP 2012099476 A | 24-05-2012 |
| | | KR 20120047196 A | 11-05-2012 |
| | | US 2012107678 A1 | 03-05-2012 |
| CN 206849914 U | 05-01-2018 | NONE | |
| US 2018309101 A1 | 25-10-2018 | CN 108140761 A | 08-06-2018 |
| | | EP 3367461 A1 | 29-08-2018 |
| | | ES 2961966 T3 | 14-03-2024 |
| | | JP 6797819 B2 | 09-12-2020 |
| | | JP WO2017068708 A1 | 30-08-2018 |
| | | KR 20180053418 A | 21-05-2018 |
| | | US 2018309101 A1 | 25-10-2018 |
| | | WO 2017068708 A1 | 27-04-2017 |
| WO 2023075416 A1 | 04-05-2023 | CN 117837005 A | 05-04-2024 |
| | | EP 4372882 A1 | 22-05-2024 |
| | | JP 7758428 B2 | 22-10-2025 |
| | | JP 2024536849 A | 08-10-2024 |
| | | KR 20230061947 A | 09-05-2023 |
| | | WO 2023075416 A1 | 04-05-2023 |
| US 2023207941 A1 | 29-06-2023 | CN 115298885 A | 04-11-2022 |
| | | EP 4135108 A1 | 15-02-2023 |
| | | JP 7507880 B2 | 28-06-2024 |
| | | JP 2023523207 A | 02-06-2023 |
| | | KR 20220039619 A | 29-03-2022 |
| | | US 2023207941 A1 | 29-06-2023 |
| | | WO 2022065841 A1 | 31-03-2022 |

EPO FORM P0459

For more details about this annex : see Official Journal of the European Patent Office, No. 12/82